(19) Europäisches Patentamt
European Patent Office
Office européen des brevets

(11) **EP 4 757 169 A1**

(12) **EUROPEAN PATENT APPLICATION**

(43) Date of publication:
**10.06.2026  Bulletin 2026/24**

(21) Application number: 24315548.8

(22) Date of filing: **04.12.2024**

(51) International Patent Classification (IPC):
*H02P 25/22* (2006.01)        *H02P 29/024* (2016.01)
*H02P 29/028* (2016.01)

(52) Cooperative Patent Classification (CPC):
**H02P 29/0243; H02P 25/22; H02P 29/025; H02P 29/028**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Watt & Well**
**84120 Pertuis (FR)**

(72) Inventor: **Assoun, Ihab**
**91120 PALAISEAU (FR)**

(74) Representative: **IXAS Conseil**
**22, avenue René Cassin**
**69009 Lyon (FR)**

(54) **FAULT TOLERANT MULTIPHASE CONTROL FOR PERMANENT MAGNET SYNCHRONOUS MOTORS**

(57)      Method for fault detection and autonomous reconfiguration of a system comprising
an electromechanical converter, capable of detection faults and autonomously reconfiguring itself to ensure post-fault operation with acceptable performance,
said system comprising a permanent magnet synchronous motor with open-end windings, said motor comprising three identical groups of phases, each group of phases having five phases, each group of phases having a separate DC voltage source, and each group of phases having an inverter or a static converter with a H-bridge or full-bridge structure,
in which method:

if a first faulty phase is detected, then this faulty phase is isolated from its group and the four remaining phases of said group are reconfigured, such as to increase their currents to compensate at least in part the lost current of the faulty phase,
and/or in which method,
if a first faulty DC source is detected, the group to which said faulty DC source belongs is a disabled group, and the currents are increased in the two remaining groups, such as to compensate at least in part the lost current of the disabled group.

Figure 2

## Description

### Technical field of the invention

The present invention belongs to the general field of electrical engineering, and more precisely to the field of the control of permanent magnet synchronous motors. These are electric motors using alternate current (abridged AC) in which permanent magnets are used as the rotor and electromagnets as the stator. At steady state operation, the rotation of the shaft is synchronized with the frequency of the supply current and does not change with the load. Changing the rotation speed requires a change in stator supply frequency.

In particular, the present invention is addressing issues related to the reliability and fault tolerance of multiphase permanent magnet synchronous motors. More precisely, the invention is directed to a fault tolerant multi-phase control system configured to detect faults, such as open-circuit faults, occurring in one of the phases of a permanent magnet synchronous motor, and to reconfigure the system such that an acceptable performance of the motor is obtained.

### State of the art

In aircraft and space engineering the reliability and stability of electrical systems is of paramount importance. Traditionally this goal can be achieved by systems that are functionally redundant or that comprise critical components which are oversized. This however induces additional weight and cost. Another approach is to design the systems in a way that components which are notoriously less reliable are no longer used. This often requires new approaches to the design of such systems.

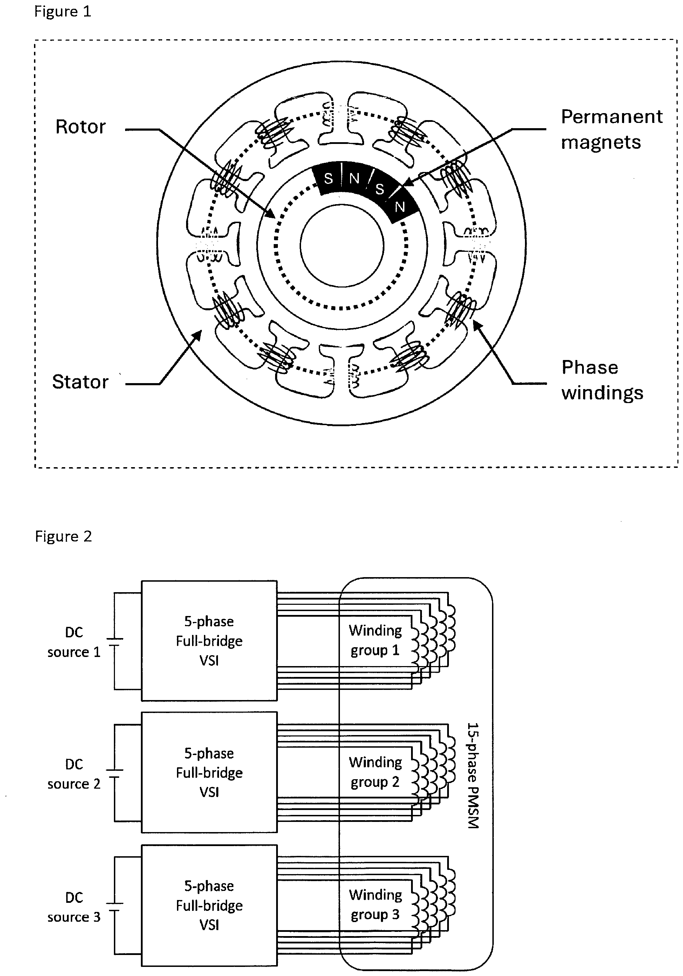

Permanent Magnet Synchronous Motors (abridged PMSM, the last "M" may also be read as "Machine" instead of "Motor") are used in the field of aircraft and space engineering, some of them in highly critical electromechanical components such as pumps for liquid oxygen and liquid hydrogen. Compared to Direct Current (abridged DC) machines and inductive machines they present a high-power density, high efficiency and a low weight and size for a given torque. The principle of a PMSM is show on Figure 1. It includes a rotor with an array of permanent magnets of alternate polarity, as well a stator bearing a plurality of phase windings. This figure is for explanatory purpose of the principle of a stator only (as indicated by the dots on the rotor and between the teeth of the stator), as the number of phase windings and the number of slots do not necessarily represent a realistic case for carrying out the present invention.

PMSM may exhibit various types of failures. Failures related to sensors as well as electrical machine failures, which include eccentricity faults and bearing faults (usually due to poor lubrication), and demagnetization faults related to the permanent magnets will not be dealt with here.

The remaining faults are mainly of three types: static converter failures, resistive unbalance faults, and open-phase faults.

Static converter failures include failures of switching devices, which are mainly of two types: short circuits type faults (a switch remains locked in the closed position) and open-switch type faults (a switch remains locked in the open position).

The resistive unbalance fault denotes that the phase resistance is increased while the phase inductance is unchanged, which is usually caused by a combination of poor workmanship, thermal cycling and vibration, or damage of the contact surfaces due to pitting, corrosion, or contamination

Open-phase faults most often originate from the stator winding or the two switches on the same leg of the inverter. Faults originating from stator windings may be related to insufFicient electrical isolation between the stator windings phases and ground. Open-Phase Faults (OPF) will result in imbalances among currents of different phases, huge torque ripple, and stronger electromagnetic interference, as well as other hidden risks in the long run. Therefore, when an OPF occurs, to ensure the safety of all airborne equipment and control performance, the electric drive system needs to identify and locate the open-phase fault quickly and accurately, offering the basis for executing the fault-tolerance control

Many PMSM implement some kind of Fault Tolerant Control (FTC). A sensorless and fault tolerant control system for use in PSMS has been described in the publication [1].

The present invention focuses on fault tolerant multiphase motor control system for PMSM used in aerospace systems, and in particular in space launch vehicles; this is a use for which the requirement of reliability is probably the most extreme compared to any other industry.

Multiphase motors can divide the electric power evenly into the pins of a plurality of inverters, thereby reducing the switching current of each phase: When one or more of the windings are open, i.e., faulty, the connection mode of the motor is not changed, and the remaining healthy phases can continue to operate (see reference [2]). Five-phase, twelve-phase and fifteen-phase motors are used nowadays.

One of the problems addressed by the present invention is to present a control system and a converter topology capable of effectively managing the inverter-machine system, considering factors such as performance end efficiency, as well as various constraints and requirements. These constraints include limitations on current levels in motor phases and switches; considerations related to system reliability and service continuity are of paramount importance.

Another problem is to design a system that can detect faults and autonomously reconfigure itself to ensure post-fault operation with acceptable performance. Such a system should also minimize electromagnetic torque ripple, as it directly affects overall performance of the motor.

## Objects of the invention

The present invention applies to a system comprising an electromechanical converter. More precisely, a Permanent Magnet Synchronous Motor with fifteen phases is used for the present invention. It comprises three identical groups of phases. Each group of phases has five phases. Each group of phases has a separate DC voltage source. Each group of phases has an inverter or a static converter with a H-bridge or full-bridge structure. Said motor, said DC voltage sources and said inverters and/or converters form part of the system according to the invention.

According to the invention the problem is solved by a method for fault detection and autonomous reconfiguration of said system. This method can be carried out by a suitably configured programmable logic device, which advantageously forms part of the system according to the invention.

In this method, a diagnose of faults in group phases is carried out continuously, at a given frequency (for instance of the order of 40 kHz). A diagnose of faults in DC voltage sources is carried out continuously, too.

If a first faulty phase is detected, the remaining phases are reconfigured for this group, and the current amplitude and phase shift are adjusted for the remaining phases, such as to compensate at least in part the lost power of the group with the faulty phase.

If a second faulty phase is detected in the same group as the first one, this group becomes a disabled group and is therefore lost.

If a second faulty phase is detected in another group, the remaining phases of this group are reconfigured and the currents are increased in the two other groups, such as to compensate at least in part the lost current of the group with the second faulty phase.

If a first faulty DC source is detected for a group, this group becomes a disabled group, and the currents are increased in the two other groups, such as to compensate at least in part the lost current of the disabled group.

If a second faulty DC source is detected, the motor is shut down, as it is not possible to compensate for two disabled groups.

This method for fault detection and autonomous reconfiguration of the 15-phase motor increases the system reliability by introducing not only redundancy but a mechanism of self-repair of the system by a suitable reconfiguration to compensate a phase fault or a voltage source failure.

A first object of the present invention is a method for fault detection and autonomous reconfiguration of a system comprising an electromechanical converter, capable of detection faults and autonomously reconfiguring itself to ensure post-fault operation with acceptable performance,

said system comprising a permanent magnet synchronous motor with open-end windings, said motor comprising three identical groups of phases, each group of phases having five phases, each group of phases having a separate DC voltage source, each group of phases having an inverter or a static converter with a H-bridge or full-bridge structure,

in which method:

if a first faulty phase is detected, then this faulty phase is isolated from its group and the four remaining phases of said group are reconfigured, such as to increase their currents to compensate at least in part the lost current of the faulty phase,

and/or in which method,

if a first faulty DC source is detected, the group to which said faulty DC source belongs is a disabled group, and the currents are increased in the two remaining groups, such as to compensate at least in part the lost current of the disabled group.

Reconfiguration of the the four remaining phases can be achieved by increasing their current amplitudes and applying a phase shift, such as to compensate at least in part the lost current of the faulty phase.

According to a first variant, to compensate said first faulty phase, for two non-adjacent phases of said four remaining phases, the current is increased by about 26,7 % and the phase shift is about +/- 0.70 radian, and for two adjacent phases of said four remaining phases, the current is increased by about 46.3 % and the phase shift is about +/- 2.65 radian.

According to a second variant, which can be combined with the first one, if a second faulty phase is detected in the same group as the first one, this group to which said faulty phase belongs is a disabled group, and the currents of the other groups are increased such that their current compensates at least in part the lost current of said disabled group.

According to a third variant, which can be combined with the first one and/or with the second one, if another faulty phase is detected in another group, the currents are increased in the two other groups, such as to compensate at least in part the lost current of the group with the other faulty phase.

According to a fourth variant, which can be combined with the first one and/or with the second one and/or with the third one, to compensate for a faulty group, the currents of the two remaining groups are increased such that their current increases by about about 50 %.

According to a fifth variant, which can be combined with the first one and/or with the second one and/or with the third one and/or with the fourth one, if a second group becomes disabled, the motor is shut down.

A second object of the present invention is a system for an electromechanical converter, capable of detection faults and autonomously reconfiguring itself to ensure post-fault operation with acceptable performance, said system comprising:

> a permanent magnet synchronous motor with open-end windings, said motor comprising three identical groups of phases, each group of phases having five phases, each group of phases having a separate DC voltage source, each group of phases having an inverter or a static converter with a H-bridge or full-bridge structure,

> and said system further comprising a programmable logic device, such as a field-programmable gate array FPGA, configured for carrying out the method for fault detection and autonomous reconfiguration of the system according to any of the embodiments of the invention.

Said motor can further comprise means for determining the position of the rotor with respect to the stator.

A third object of the present invention is the use of a system according to any of the embodiments of the invention in the field of aircraft engineering or space engineering, in particular for operating a pump, such as a fuel pump or a pump for pressuring fluids, possibily cryogenic fluids, or as a propelling motor in aircrafts.

A fourth object of the present invention is a computer program comprising instructions which, when the program is executed by a programmable logic device integrated into the system according to the invention, cause said system to carry out steps of the method for fault detection and autonomous reconfiguration of the system according to any of the embodiments of the invention.

### Brief description of the figures

Figures 1 to 23 illustrate various aspects of the invention but are not meant to limit the scope of the present invention.

Figure 1 shows a permanent magnet synchronous motor, comprising a rotor with a plurality of alternating permanent magnets, and a stator with a plurality of phase windings.

Figure 2 shows the architecture of an inverter for a 15-phase motor as used in the present invention.

Figure 3 shows a real multiphase machine and its representation, for the sake of modelling, as a number of fictitious two-phase and single-phase machines.

Figure 4 shows a voltage inverter for supply of 15 phases organized in three groups.

Figure 5 shows the principle of a Pulse Width Modulation (abridged PWM) generation module.

Figure 6 shows an update of the input vector of the Clarke transform depending on the OPF situation.

Figure 7 shows a synoptic of the generalized frame transform applied to the electrical variables so that they can be continuous in the (dq) domain.

Figure 8 shows the working principle of the Fault Detection and Isolation (abridged FDI) process according to the invention: healthy phase (full amplitude), faulty phase ( very low amplitude).

Figure 9 show the principle of reconfigurable current controllers.

Figure 10 shows the stator currents setpoint vectors in healthy condition (black) and degraded condition (grey).

Figure 11 shows the Fresnel diagram in healthy operation.

Figure 12 shows the Fresnel diagram in degraded operation.

Figure 13 shows the principle of speed control and current control loops.

Figure 14 shows an overview of the PWM generation modules.

Figure 15 shows the time domain response.

Figure 16 relates to figure 16 and shows the Bode diagram.

Figure 17 shows the controlled DQ currents in healthy, faulty and degraded operation.

Figure 18 shows the phase currents of motor windings groups (1,2,3).

Figure19 shows the developed torques of the PMSM and each winding group.

Figure 20 shows the mechanical variables.

Figure 21 shows the evolution of stator phase measured currents for the three winding groups.

Figure 22 relates to figure 21 and shows the evolution of command voltages for the three winding groups.

Figure 23 shows a simplified flow diagram of a method according to an embodiment of the invention which allows to control the FTC method, and which allows transitions from one mode of operation to another, in case of failure.

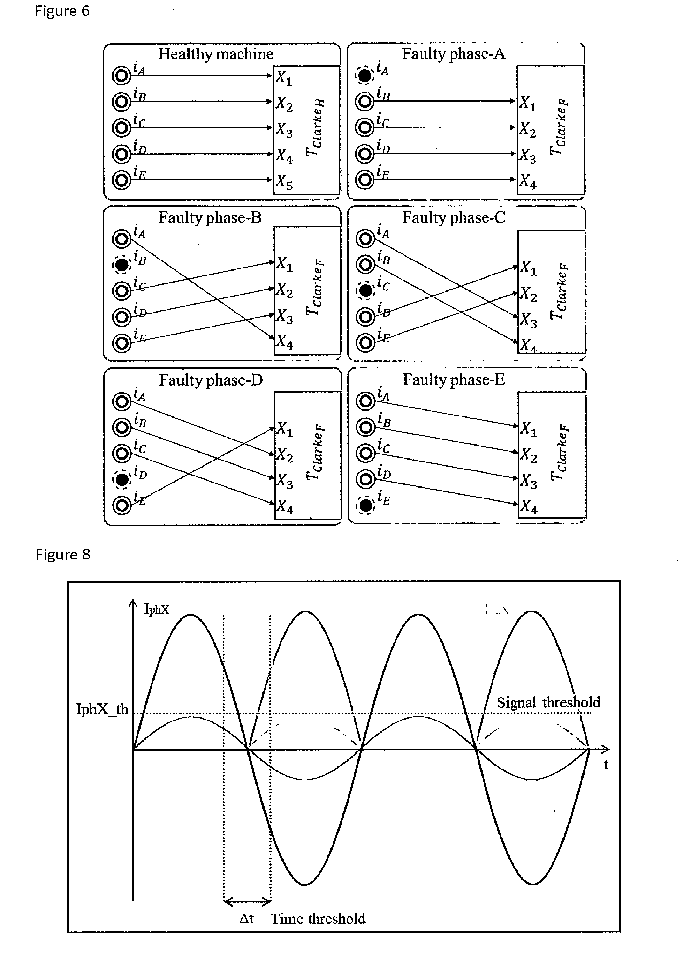

In figures 8 and 17 to 22, the horizontal axis represents the time.

**Detailed description**

1. Introduction

An electromechanical converter is a device within which there are local interactions between electrical phenomena and mechanical phenomena. Any electromechanical converter has at least an electrical access by which it is connected to an external electrical system, and a mechanical access by which it is connected to an external mechanical system.

The parameters related to the electrical accesses are linked to the parameters related to the mechanical accesses through local interactions between electrical and mechanical parameters within the converter. As an example, the force produced at a mechanical access will, for example, depend on the currents at the electrical access; the voltage which appears at an electrical access will, for example, depend on the speed at which movement takes place at a mechanical access. The connections between electrical and mechanical parameters at the accesses lead to energy exchanges between the electrical and mechanical systems that the converter connects.

The present invention focuses on a permanent magnet synchronous motor. Figure 1 shows a simplified cross section of a permanent magnet synchronous motor, comprising a rotor with a plurality of alternating permanent magnets, and a stator with a plurality of phase windings, each phase winding consisting of an insulated conductor, which passes through slots cut along the axis of the stator. This is prior art.

The machine according to the invention has three independent sectors, representing three independent winding groups (without magnetic coupling) connected in series. This enhances system reliability and performance in degraded mode operation.

The invention is described in detail with reference to the figures. Examples are presented on the basis of a 60 kW machine (operating point at rated torque: output power about 46 kW, output torque about 525 Nm, speed about 830 rpm at a frequency of about 460 Hz) and inverter according to the invention, focusing on the control of an inverter-machine system for a Permanent Magnet Synchronous Motor (abridged PMSM) and providing a comprehensive overview of the design, modelling, and control strategies. Furthermore, fault-tolerant current controllers and the speed controller are exemplified. To validate the effectiveness of the control algorithms, extensive numerical simulations are necessary; they are presented both for the motor itself and the associated inverter.

The invention is used in relation with a fifteen-phase machine which is organized into three independent winding groups (without magnetic coupling) in order to enhance system reliability and performance in degraded mode operation, as well as to adapt the electrical machine to the power electronics (current rating of selected switches). The three winding groups are identical; each winding group comprises five phases.

The invention will be presented first in relation with mathematical modelling of a simplified system (section 2 of the Description), both for the case of a healthy machine and a faulty machine; the modelling of the voltage source inverter will be presented, too. Subsequently (section 3 of the Description), a voltage source inverter according to the invention will be described. In a fourth section, a method for Fault Tolerant Control (abridged FTC) of the PMSM according to the invention will be described in detail, including among others, current control strategies, fault detection, and mechanical speed control. Examples for simulation-based validations will be given in section five of the Description.

We will outline here beforehand the principle of the 15-phase motor which forms the basis of the present invention.

Figure 2 shows the architecture of an inverter for a 15-phase motor. The inverter comprises three groups of five phases each. Each group has its own, distinctive DC voltage supply, designated as "DC source 1", "DC source 2" and "DC source 3", supplying energy to a distinct 5-phase inverter, which, in turn, supplies energy to winding groups representing five phases. Said 5-phase inverter can be in H bridge (full bridge) configuration.

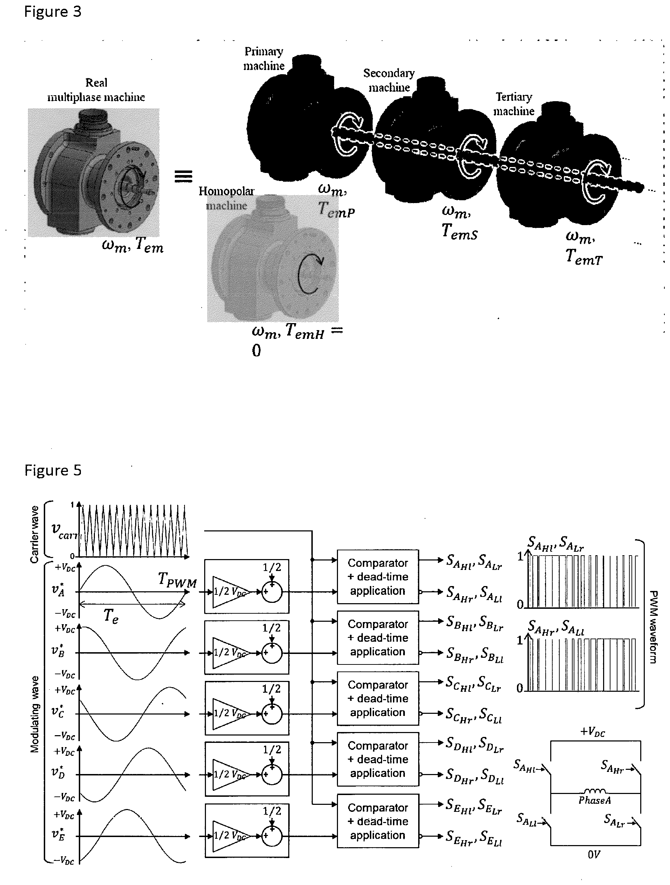

Figure 3 shows a real multiphase machine and its representation, for the sake of modelling. According to this approach of multi-machine modelling, a multiphase machine is decomposed into a number (depending on the number of phases) of fictitious two-phase and single-phase machines. More generally, a multi-phase machine can be seen as several separate fictitious machines, fed by distinct voltage vectors, and contributing to the generation of a common torque. The number of fictitious machines grouping the current harmonics increases with the increase of the phases. A three-phase machine, for example, has two fictitious machines, a single-phase machine called "Homopolar" gathering the harmonics of rank multiple of the number of phases and a two-phase machine called "Primary" gathering the remaining harmonics. A five-phase machine has, in addition to the homopolar machine and the primary machine, a third fictitious machine called "Secondary". In all cases, the homopolar machines do not participate in the generation of electromagnetic torque. Only the other fictitious machines produce torque, when their currents and back-EMFs are not zero.

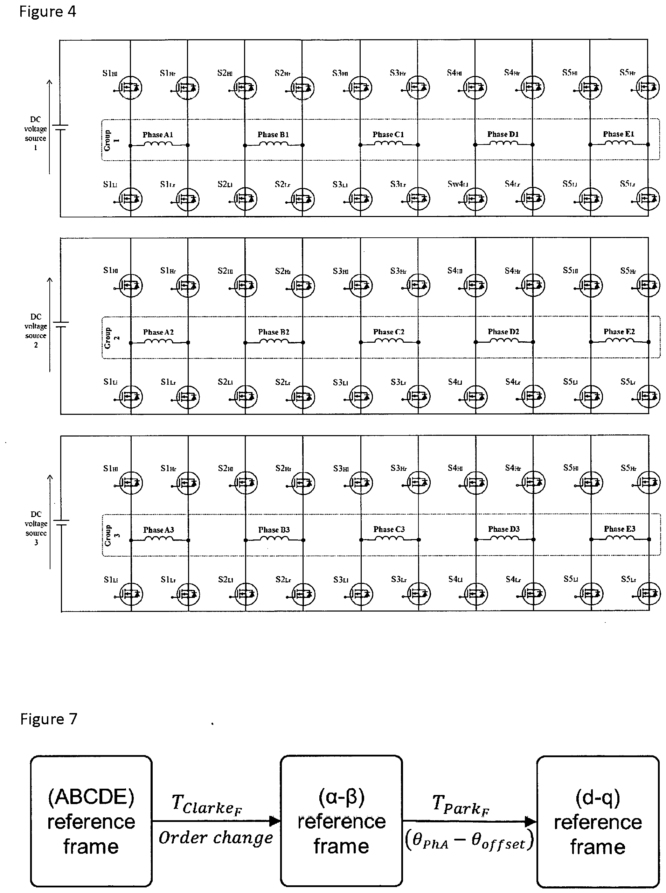

Figure 4 shows a voltage inverter for supply of 15 phases organized in three groups; this is a more detailed representation of figure 2.

The configuration of the electric machine and the structure of the inverter make it possible to implement vector control (also known as Field-Oriented Control, abridged FOC) for each of the winding groups. This is made possible thanks to the design of the electrical machine which aims to eliminate mutual inductances between the phases of the different groups of windings.

In case of open-phase fault of a single winding in one of the winding groups, the system will automatically adjust the vector control strategy such as to minimize the impact of the default on the operation of the machine. To compensate for the absence of the electromotive force voltage generated by the open phase, the shapes of the currents in the healthy phases are modified to produce a low-undulatory electromagnetic torque.

When a stator phase loss fault is detected in one of the winding groups, the system automatically adjusts the control of the multiphase machine to minimize the effects of the fault on overall performance. The current references (images of the couples) applied to the different groups are modified. The reference of the faulty winding group is reduced while the references of the other winding groups are increased, such as to maintain the same total torque developed.

In the event of a fault on one of the three DC sources powering the inverters, thanks to the multiplication of voltage sources and their independence from each other, the inverter associated with the faulty inverter is isolated. Continuity of service of the PMSM can be ensured, in degraded mode, by the two groups of windings supplied by the healthy inverters.

This system has several advantages. One of these advantages is better tolerance to stator phase loss faults. By reducing mechanical torque ripples generated by the faulty winding unit, the machine maintains stable performance in the presence of faults. In addition, the multiplication of the machine's power phases makes it possible to distribute the power and to use smaller power switches for the same transmitted power.

## 2. Mathematical modelling of a fifteen-phase PMSM drive according to the invention

### a) Assumptions for modelling

The fifteen-phase PMSM according to the invention comprises fifteen identical phases forming three identical groups of five phases each. We will describe here a mathematical model for a single phase. The simplifying assumptions adopted in the model are the following:

- Saturation and hysteresis of the magnetic circuit are neglected as well as the eddy current losses: the relations between flux and current are linear.
- The air gap is of uniform thickness: there is no variable reluctance effect.
- The rotor of the machine is perfectly smooth: the leakage reluctances are independent of the rotor position; there is no saliency effect.
- The stator windings are assumed to be symmetrical and identical. The spatial offset between one group phases is exactly equal to 72.0°. Their mutual inductances are constant. The mutual inductances between different group phases are considered negligible due to the construction of the machine.
- The winding resistances do not vary with temperature and the skin effect in conductors is not considered.
- The capacitive couplings between the windings are very low.
- The magnetic flux of the PMSM is sinusoidal. Still, the models will be enhanced by incorporating the third harmonic to achieve a more comprehensive representation.
- The static and viscous friction torques, as well as cogging torque, are neglected given the high mechanical load.

b) Electrical model of the healthy machine

We will present here the PMSM electrical model of the healthy machine in the fifteen-phase natural reference frame.

The axes of this reference frame are stationary with respect to the stator of the machine. The stator voltage expressions can be written for each windings group, in matrix form, as:

$$\left[v_{ABCDE_{xH}}\right] = [R_s] \cdot \left[i_{ABCDE_{xH}}\right] + [L] \cdot \frac{d}{dt}\left(\left[i_{ABCDE_{xH}}\right]\right) + \left[e_{ABCDE_{xH}}\right] \quad \text{Equation 1}$$

wherein $[v_{ABCDE_{xH}}]$ represents the voltage vector applied to the group windings, and $[i_{ABCDE_{xH}}]$ represents the vector of currents flowing in the windings. The variable "x" represents the number of the winding group and takes values of 1, 2, or 3. $[R_s]$ is the matrix containing one stator phase resistance per phase noted $r_s$ and defined as:

$$[R_s] = r_s \cdot I_{5x5} \quad \text{Equation 2}$$

$[L]$ is the inductance matrix that is assumed symmetrical and totally independent of the rotor position:

$$[L] = \begin{bmatrix} L_0 & M_{12} & M_{13} & M_{13} & M_{12} \\ M_{12} & L_0 & M_{12} & M_{13} & M_{13} \\ M_{13} & M_{12} & L_0 & M_{12} & M_{13} \\ M_{13} & M_{13} & M_{12} & L_0 & M_{12} \\ M_{12} & M_{13} & M_{13} & M_{12} & L_0 \end{bmatrix} \quad \text{Equation 3}$$

wherein

$L_0$ represents the self-inductance of a stator phase,
$M_{12}$ represents the mutual inductance between two consecutive stator phases,
$M_{13}$ represents the mutual inductance between two non-consecutive stator phases.

Despite the low ratios between the values of the windings self-inductances and the mutual inductances ($\approx$30) thanks to the concentric windings, the latter are not neglected and are considered in the following modelling.

The vector of the Back-Electromotive Forces (BEMF) induced at stator phase in $[e_{ASCVE_H}]$ is expressed, for each group, by:

$$[e_{ABCDE_{xH}}] = \begin{bmatrix} e_A \\ e_B \\ e_C \\ e_D \\ e_E \end{bmatrix} = \frac{d\,[\phi_{ABCDE_{xH}}]}{dt}$$

$$= -\sum_{j=0}^{j\to\infty} \Psi_{pm(2j+1)} \cdot \omega \cdot \begin{bmatrix} sin((2j+1)\cdot\theta) \\ sin\left((2j+1)\cdot\left(\theta - \frac{2\pi}{5}\right)\right) \\ sin\left((2j+1)\cdot\left(\theta - \frac{4\pi}{5}\right)\right) \\ sin\left((2j+1)\cdot\left(\theta + \frac{4\pi}{5}\right)\right) \\ sin\left((2j+1)\cdot\left(\theta + \frac{2\pi}{5}\right)\right) \end{bmatrix} \qquad \text{Equation 4}$$

wherein

$\phi_{ABCDE}$ represents the flux linkage of the permanent magnets of the rotor through the stator windings,
$\Psi_{pm(2j+1)}$ represents the permanent magnet flux constants of the odd harmonics $(2j + 1)$,
$\omega$ represents the electrical angular speed,
$\theta$ represents the electrical angle which designates the rotor position.

We will now present the electrical model in the (α-β) stationary frame. Clarke's matrix allows the stator three-phase variables to be represented in a fixed two-phase reference frame (α-β). An extended version of this matrix is used here to create, from a five-phase stator frame, new frames. The first frame carries the primary fictitious machine and represents the fundamental signals on the $(\alpha_p)$ and $(\beta_p)$ axes, the second represents the signals of a harmonic on the $(\alpha_s)$ and $(\beta_s)$ axes, while the axis $h$ carries the homopolar components of the signals. The coefficients of the direct and inverse matrices are given in equations (5) and (6), wherein $(\delta = 2\pi/5)$ denotes the spatial angular shift between consecutive phases.

$$[T_{Clarke_H}] = \frac{2}{5} \cdot \begin{bmatrix} 1 & cos(\delta) & cos(2\delta) & cos(3\delta) & cos(4\delta) \\ 0 & sin(\delta) & sin(2\delta) & sin(3\delta) & sin(4\delta) \\ 1 & cos(2\delta) & cos(\delta) & cos(\delta) & cos(2\delta) \\ 0 & sin(2\delta) & sin(-\delta) & sin(\delta) & sin(-2\delta) \\ 1 & 1 & 1 & 1 & 1 \end{bmatrix} \qquad \text{Equation 5}$$

$$[T_{Clarke}^{-1}] = \begin{bmatrix} 1 & 0 & 1 & 0 & 1/2 \\ cos(\delta) & sin(\delta) & cos(-2\delta) & sin(2\delta) & 1/2 \\ cos(-2\delta) & sin(2\delta) & cos(\delta) & sin(4\delta) & 1/2 \\ cos(-2\delta) & sin(3\delta) & cos(\delta) & sin(\delta) & 1/2 \\ cos(\delta) & sin(4\delta) & cos(-2\delta) & sin(3\delta) & 1/2 \end{bmatrix} \qquad \text{Equation 6}$$

By applying the Clarke transform to one winding group five-phase vectors in equation (1), we obtain:

$$\begin{bmatrix} v_{\alpha p} \\ v_{\beta p} \\ v_{\alpha s} \\ v_{\beta s} \\ v_h \end{bmatrix} = R_s \cdot \begin{bmatrix} i_{\alpha p} \\ i_{\beta p} \\ i_{\alpha s} \\ i_{\beta s} \\ i_h \end{bmatrix} + \left[ L_{\alpha \beta H} \right] \cdot \frac{d}{dt} \left( \begin{bmatrix} i_{\alpha p} \\ i_{\beta p} \\ i_{\alpha s} \\ i_{\beta s} \\ i_h \end{bmatrix} \right) + \begin{bmatrix} e_{\alpha p} \\ e_{\beta p} \\ e_{\alpha s} \\ e_{\beta s} \\ e_h \end{bmatrix} \qquad \text{Equation 7}$$

wherein $[L_{\alpha \beta H}]$ represents the inductance matrix in the $(\alpha \beta)$ reference frame which is given by:

$$\left[ L_{\alpha \beta H} \right] = \left[ T_{Clarke_H} \right] \cdot [L] \cdot \left[ T_{Clarke_H} \right]^{-1} = \begin{bmatrix} L_{\alpha p} & 0 & 0 & 0 & 0 \\ 0 & L_{\beta p} & 0 & 0 & 0 \\ 0 & 0 & L_{\alpha s} & 0 & 0 \\ 0 & 0 & 0 & L_{\beta s} & 0 \\ 0 & 0 & 0 & 0 & L_h \end{bmatrix} \qquad \text{Equation 8}$$

In the case of a smooth magnet rotor, the axis inductances of the same fictitious machine are identical.

$$L_{\alpha p} = L_{\beta p} = L_0 + 2 \cdot M_{12} \cdot \cos(\delta) + 2 \cdot M_{13} \cdot \cos(2\delta) = L_p$$

$$\text{Equation 9}$$

$$L_{\alpha s} = L_{\beta s} = L_0 + 2 \cdot M_{12} \cdot \cos(2\delta) + 2 \cdot M_{13} \cdot \cos(\delta) = L_s$$

The Back-EMF, considering the 1st and 3rd harmonics, is given by:

$$\left[ e_{\alpha \beta H} \right] = \begin{bmatrix} e_{\alpha p} \\ e_{\beta p} \\ e_{\alpha s} \\ e_{\beta s} \\ e_h \end{bmatrix} = \left[ T_{Clarke_H} \right] \cdot \left[ e_{ABCDE_H} \right] = \begin{bmatrix} -\Psi_{pm_1} \cdot \omega \cdot sin(\theta) \\ +\Psi_{pm_1} \cdot \omega \cdot cos(\theta) \\ -3\Psi_{pm_3} \cdot \omega \cdot sin(3\theta) \\ -3\Psi_{pm_3} \cdot \omega \cdot cos(3\theta) \\ 0 \end{bmatrix} \qquad \text{Equation 10}$$

We will now present the electrical model in the (d-q) rotating frame. In order to further simplify the machine model and to have the controlled quantities (currents, voltages, fluxes/Back-EMF) continuous, additional rotation is applied to $(\alpha\text{-}\beta)$. The new rotor-related reference frame requires a knowledge of the electrical angle of rotation $(\theta)$ to produce time-independent representations of the electrical quantities.

The rotation transform matrix is given by:

$$\left[ T_{Park_H} \right] = \begin{bmatrix} +cos(\theta) & +sin(\theta) & 0 & 0 & 0 \\ -sin(\theta) & +cos(\theta) & 0 & 0 & 0 \\ 0 & 0 & +cos(3\theta) & -sin(3\theta) & 0 \\ 0 & 0 & +sin(3\theta) & +cos(3\theta) & 0 \\ 0 & 0 & 0 & 0 & 1 \end{bmatrix} \qquad \text{Equation 11}$$

The reference frame attached to primary machine rotates with speed $(\omega)$ with respect to the stator and is fixed with respect to the rotor. The reference frame attached to the secondary machine rotates at three times the electrical fundamental frequency $(3\omega)$ in the opposite direction to the reference frame of the primary machine.

Knowing that $(i_h = 0)$, the equation related to the homopolar variables is not involved. Then the PMSM model in $(d\text{-}q)$ reference frame is given by:

$$\begin{cases} v_{dp} = R_s \cdot i_{dp} + L_p \cdot \dfrac{di_{dp}}{dt} - \omega \cdot L_p \cdot i_{qp} + e_{dp} \\[2mm] v_{qp} = R_s \cdot i_{qp} + L_p \cdot \dfrac{di_{qp}}{dt} + \omega \cdot L_p \cdot i_{dp} + e_{qp} \\[2mm] v_{ds} = R_s \cdot i_{ds} + L_s \cdot \dfrac{di_{ds}}{dt} + 3\omega \cdot L_s \cdot i_{qs} + e_{ds} \\[2mm] v_{qs} = R_s \cdot i_{qs} + L_s \cdot \dfrac{di_{qs}}{dt} - 3\omega \cdot L_s \cdot i_{ds} + e_{qs} \end{cases}$$

Equation 12

wherein:

$$[e_{dq_H}] = [T_{Park_H}] \cdot [e_{\alpha\beta_H}] = \begin{bmatrix} 0 \\ \Psi_{pm_1} \cdot \omega \\ 0 \\ -3\Psi_{pm_3} \cdot \omega \\ 0 \end{bmatrix}$$

Equation 13

c) Electrical model of the faulty machine

One of the most serious faults is an OPF (Open Phase Fault). If such a fault occurs in a fifteen-phase machine, the control strategies become ineffective as they are based on a healthy machine model. This results in undulations in the developed torque, affecting the electromagnetic conversion and possibly causing further faults. To be able to control the machine in the presence of the fault, the approach according to the invention comprises a step of remodelling this machine in its faulty state. This implies to have the behaviour of the healthy machine based on the change of the matrices of transformation of reference following the condition of the system.

We will first present the analysis in the fifteen-phase natural frame. Let us assume that the OPF appears in the A phase of the PMSM. The current in this phase becomes zero ($i_A$=0). Thus, the parameters (resistance and inductance) and variables (current, voltage and Back-EMFs) related to the failed phase are ignored.

Equation 14 gives the new PMSM electrical equations expressed in the natural frame and after the loss of the first phase.

$$[v_{BCDE_x}] = [R_F] \cdot [i_{BCDE_x}] + [L_F] \cdot \frac{d}{dt}([i_{BCDE_x}]) + [e_{BCDE_x}]$$

Equation 14

wherein

[$v_{BCDE}$] and [$i_{BCDE}$] represent, respectively, the voltage and current vectors of dimension (4x1) including healthy phases variables,

[$R_F$] represents the stator resistance matrix, expressed as follows,

$$[R_F] = \begin{bmatrix} r_s & 0 & 0 & 0 \\ 0 & r_s & 0 & 0 \\ 0 & 0 & r_s & 0 \\ 0 & 0 & 0 & r_s \end{bmatrix}$$

Equation 15

[$L_F$] represents the stator inductance matrix including the self and mutual inductances of the machine, expressed as follows,

$$[L_F] = \begin{bmatrix} L_0 & M_{12} & M_{13} & M_{13} \\ M_{12} & L_0 & M_{12} & M_{13} \\ M_{13} & M_{12} & L_0 & M_{12} \\ M_{13} & M_{13} & M_{12} & L_0 \end{bmatrix} \qquad \text{Equation 16}$$

The back-electromotive force corresponding to the lost phase does not participate in the generation of mechanical torque, so it is no longer considered. Then the new vector is given by:

$$[e_{BCDE_{xF}}] = \begin{bmatrix} e_B \\ e_C \\ e_D \\ e_E \end{bmatrix} = \frac{d\left[\phi_{BCDE_{xF}}\right]}{dt}$$

$$= -\Psi_{pm1} \cdot \omega \cdot \begin{bmatrix} sin\left(\theta - \frac{2\pi}{5}\right) \\ sin\left(\theta - \frac{4\pi}{5}\right) \\ sin\left(\theta + \frac{4\pi}{5}\right) \\ sin\left(\theta + \frac{2\pi}{5}\right) \end{bmatrix} - \Psi_{pm3} \cdot \omega \cdot \begin{bmatrix} sin\left(3\theta + \frac{4\pi}{5}\right) \\ sin\left(3\theta - \frac{2\pi}{5}\right) \\ sin\left(3\theta + \frac{2\pi}{5}\right) \\ sin\left(3\theta - \frac{4\pi}{5}\right) \end{bmatrix} \qquad \text{Equation 17}$$

We will now present the analysis of the faulty machine in the (α-β) stationary frame.

The new adapted matrix is used to represent the electrical quantities in the two-phase stator frame and its inverse are given in Equations (18) and (19).

$$[T_{Clarke_F}] = \frac{2}{5} \cdot \begin{bmatrix} cos(\delta) - 1 & cos(2\delta) - 1 & cos(2\delta) - 1 & cos(\delta) - 1 \\ sin(\delta) & sin(2\delta) & -sin(2\delta) & -sin(\delta) \\ -sin(2\delta) & sin(\delta) & -sin(\delta) & sin(2\delta) \\ 1 & 1 & 1 & 1 \end{bmatrix} \qquad \text{Equation 18}$$

$$[T_{Clarke_F}^{-1}] = \begin{bmatrix} \dfrac{5/4}{cos(\delta) - cos(2\delta)} & sin(\delta) & -sin(2\delta) & \dfrac{5/4 \cdot (1 - cos(2\delta))}{cos(\delta) - cos(2\delta)} \\ \dfrac{-5/4}{cos(\delta) - cos(2\delta)} & sin(2\delta) & sin(\delta) & \dfrac{-5/4 \cdot (1 - cos(\delta))}{cos(\delta) - cos(2\delta)} \\ \dfrac{-5/4}{cos(\delta) - cos(2\delta)} & -sin(2\delta) & -sin(\delta) & \dfrac{-5/4 \cdot (1 - cos(\delta))}{cos(\delta) - cos(2\delta)} \\ \dfrac{5/4}{cos(\delta) - cos(2\delta)} & -sin(\delta) & sin(2\delta) & \dfrac{5/4 \cdot (1 - cos(2\delta))}{cos(\delta) - cos(2\delta)} \end{bmatrix} \quad \begin{matrix} \text{Equation} \\ 19 \end{matrix}$$

From these previous equations, after applying the ($T_{Clarke_F}$) transformation, the obtained stationary (α-β) PMSM model can be written as

$$[v_{\alpha\beta zh_x}] = R_F \cdot [i_{\alpha\beta zh_x}] + [L_{\alpha\beta zh_F}] \cdot \frac{d}{dt}([i_{\alpha\beta zh_x}]) + [e_{\alpha\beta zh_x}] \qquad \text{Equation 20}$$

The expressions of the Back-EMFs in this frame are given in the following equations:

$$\begin{cases} e_{\alpha p} = -\Psi_{pm1} \cdot \omega \cdot sin(\theta) \\ e_{\beta p} = \Psi_{pm1} \cdot \omega \cdot cos(\theta) \\ e_z = 3\Psi_{pm3} \cdot \omega \cdot cos(3\theta) \\ e_h = \dfrac{2}{5} \cdot \Psi_{pm1} \cdot \omega \cdot sin\,(\theta) + \dfrac{2}{5} \cdot 3\Psi_{pm3} \cdot \omega \cdot sin\,(3\theta) \end{cases} \qquad \text{Equation 21}$$

$[L_{\alpha\beta zh_F}]$ is the inductance matrix in the $(\alpha\beta zh)$ reference frame, expressed as follows,

$$[L_{\alpha\beta zh_F}] = [T_{Clarke_F}] \cdot [L_F] \cdot [T^{-1}_{Clarke_F}] = \begin{bmatrix} L_p & 0 & 0 & M_{\alpha h} \\ 0 & L_p & 0 & 0 \\ 0 & 0 & L_z & 0 \\ M_{h\alpha} & 0 & 0 & L_h \end{bmatrix} \qquad \text{Equation 22}$$

A major advantage of the faulty operation transform is that the inductance matrix in the synchronous frame remains diagonal (assuming that the homopolar component is zero) which considerably simplifies the size of the model equations and also the tuning of the regulators.

We will now present the analysis of the faulty machine in the (d-q) rotating frame.

The Park rotation of the fundamental components of the currents is given by the equation

$$[T_{Park_F}] = \begin{bmatrix} cos(\theta) & sin(\theta) & 0 & 0 \\ -sin(\theta) & cos(\theta) & 0 & 0 \\ 0 & 0 & 1 & 0 \\ 0 & 0 & 0 & 1 \end{bmatrix} \qquad \text{Equation 23}$$

This transform includes only the primary fictitious machine (fundamental currents) and assume that the secondary machine is neglected. The 3rd and 4th line of the matrix $[T_{Clarke_F}]$ are respectively linked to an additional (z-axis) which is orthogonal to the ($dp$) and ($qp$) axes, and to the homopolar components ($h$).

After applying the ($T_{Park_F}$) transformation, the corresponding (d-q) PMSM model can be written as

$$\begin{cases} v_{dp_x} = R_s \cdot i_{dp} + L_{dp} \cdot di_{dp}/dt - \omega \cdot L_{qp} \cdot i_{qp} + e_{dp} \\ v_{qp_x} = R_s \cdot i_{qp} + L_{qp} \cdot di_{qp}/dt + \omega \cdot L_{dp} \cdot i_{dp} + e_{qp} \\ v_{z_x} = R_s \cdot i_z + L_z \cdot di_z/dt + e_z \\ v_{h_x} = M_{h\alpha} \cdot cos\theta \cdot di_{dp}/dt - M_{h\alpha} \cdot sin\theta \cdot di_{qp}/dt + e_h \end{cases} \qquad \text{Equation 24}$$

The expressions of the Back-EMFs in this frame are given in the following equations:

$$\begin{cases} e_{dp_x} = 0 \\ e_{qp_x} = \Psi_{pm1} \cdot \omega \\ e_{z_x} = 3\Psi_{pm3} \cdot \omega \cdot cos(3\theta) \\ e_{h_x} = 2/5 \cdot \Psi_{pm1} \cdot \omega \cdot sin\,(\theta) + 2/5 \cdot 3\Psi_{pm3} \cdot \omega \cdot sin\,(3\theta) \end{cases} \qquad \text{Equation 25}$$

The inductance matrix is given in this reference frame by:

$$[L_{dqzh_F}] = [T_{Park_F}] \cdot L_{\alpha\beta zh_F} \cdot [T^{-1}_{Park_F}]$$

$$= \begin{bmatrix} L_p & 0 & 0 & M_{\alpha h}cos\theta \\ 0 & L_p & 0 & -M_{\alpha h}sin\theta \\ 0 & 0 & L_z & 0 \\ M_{h\alpha}cos\theta & -M_{h\alpha}sin\theta & 0 & L_h \end{bmatrix} \qquad \text{Equation 26}$$

When neglecting the row and column related to the homopolar current, and knowing that elements (1,4) and (2,4) are very small, this inductance can be considered as diagonal with position-independent elements. Also, the first two elements of the diagonal of the inductance matrix are equal.

d) Electromagnetic torque

The general expression of the electromagnetic torque is given by the derivative of the stored magnetic energy - called co-energy and noted ($W_{co}$) - with respect to the electrical angle:

$$T_{em} = \frac{\partial}{\partial \theta_m}(W_{co}) \qquad \text{Equation 27}$$

By exploiting the relations introduced in equations (14), (17) and (27), the electromagnetic torque by one winding group in the healthy operation is given as:

$$T_{em_{xH}} = p \cdot (\frac{1}{2} \cdot [i_{ABCDE_{xH}}]^T \cdot \frac{d[L]}{d\theta} \cdot [i_{ABCDE_{xH}}] + [i_{ABCDE_{xH}}]^T \cdot \frac{e_{ABCDE_{xH}}}{\omega}) \qquad \text{Equation 28}$$

Assuming that $i_{dp}$, $i_{ds}$ and $i_{qs}$ are perfectly regulated to 0, we find the expression of the electromechanical torque in function of the (d-q) stator currents as in equation (29), where $p$ denotes the number of rotor pole pairs:

$$T_{em_{xH}} = \frac{5}{2} \cdot p \cdot i_{qp} \cdot \Psi_{pm1} \qquad \text{Equation 29}$$

The electromagnetic torque in degraded operation is given in equation (30):

$$T_{em_{xF}} = p \cdot (\frac{1}{2} \cdot [i_{BCDE_{xF}}]^T \cdot \frac{d[L_F]}{d\theta} \cdot [i_{BCDE_{xF}}] + [i_{BCDE_{xF}}]^T \cdot \frac{e_{BCDE_{xF}}}{\omega}) \qquad \text{Equation 30}$$

assuming that currents $i_h$, $i_{dp}$ and $i_z$ are regulated to 0.

$$T_{em_{xF}} = \frac{5}{2} \cdot p \cdot i_{qp} \cdot \Psi_{pm1} \qquad \text{Equation 31}$$

The total electromagnetic torque is the sum of the torques produced by the different harmonics of the currents that are not controlled at zero. Because of the property of equality of $L_d$ and $L_q$ (see equation 9), only the "synchronous torque" related to rotor magnets is present in the final expression of the mechanical torque, otherwise an additional component of the torque (so-called reluctant torque) appears. It is worth noting that, in the above formulas, the fundamental mechanical torque is proportional to the current as for a DC machine.

e) Mechanical modelling of the fifteen-phase PMSM drive

Based on the same assumptions and approximation as those used for electrical modelling (see above, section 2a)), the mechanical equation of the synchronous machine can be expressed as follows:

$$J_{tot} \cdot \frac{d\omega_m}{dt} = (T_{em_1} + T_{em_2} + T_{em_3}) - T_L \qquad \text{Equation 32}$$

wherein:

$J_{tot}$          represents the total (motor and load) moment of inertia [kg·m²],

$\omega_m = \omega/p$    represents the rotor angular speed [rad·s⁻¹],

$T_L$          represents the mechanical load torque [N·m],

$T_{em_x}$       represents the electromagnetic torque developed by the group $x$ [N·m].

The mechanical model does not depend on the operating condition (presence or absence of the electrical fault on the stator phases).

Also, we can establish the relationship between the angular position ($\theta_m$) between the stator and the rotor, and the mechanical speed ($\omega_m$):

$$\theta_m = \theta_{m_{t=0}} + \int_0^t \omega_m \cdot dt \qquad\qquad \text{Equation 33}$$

3. <u>Description of a voltage source inverter according to the invention</u>

After studying several voltage inverter structures, taking into account the constraints of current/voltage levels, control complexity, and reliability, a Full-Bridge power supply structure with three DC sources for the 15 windings has been identified as a particularly advantageous embodiment of the present invention. We will present first the topology of this Voltage Source Inverter (abridged VSI).

A simplified structure is shown on Figure 2. In the configuration shown in Figure 4, each machine phase is supplied by its own single-phase inverter. This arrangement offers the greatest redundancy and continuity of service, but is more complex. It allows the currents in each phase to be imposed independently. The choice of one inverter per phase also enables the use of MOSFETs with a current rating half that of a five-phase inverter, for the same DC bus voltage.

Considering perfect switches, instantaneous modeling of a single-phase inverter gives us the following equation linking the voltage applied across a machine phase to the command signals (example of phase A of group 1):

$$V_A(t) = \left(2 \cdot S_{A_{H1}}(t) - 1\right) \cdot V_{DC} \qquad\qquad \text{Equation 34}$$

Modelling with mean values over a PWM period gives us the expression for the RMS value of the voltage available across a phase, which is double that obtained with five-phase half-bridge inverters.

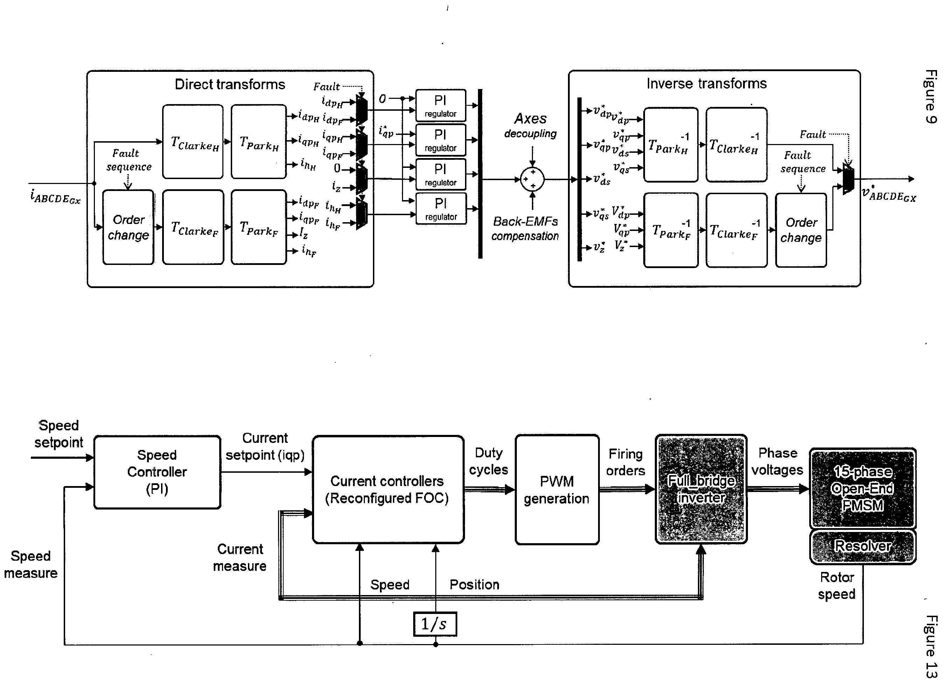

The currents zero-sequence components are not naturally null when each phase is supplied by a single-phase inverter. It must therefore be imposed by the control system, which requires an additional control loop, as will be shown below in relation with Figure 9.

According to an advantageous embodiment of the invention, the sinusoidal bipolar Pulse Width Modulation (abridged PWM) technique is employed. In this method the reference voltages delivered by the controllers, generally sinusoidal, is converted into a voltage in the form of successive pulses, alternately turning on and off the power switches.

As illustrated in Figure 5, this method is based on the comparison between two signals: a reference signal representing the command voltage and a triangular carrier defining switching frequency of the power switches. The frequency of the carrier ($f_{PWM}$) is fixed and must be much higher than the maximum electrical frequency ($f_e$).

All the control blocks are synchronized with the PWM carrier peaks. The sampling frequency is set equal to the PWM carrier frequency ($f_s = f_{PWM}$).

4. <u>Fault Tolerant Control (FTC) of the PMSM</u>

According to the invention, the system for an electromechanical converter is capable of detection faults and autonomously reconfiguring itself to ensure post-fault operation with acceptable performance.

The speed control of the PMSM is composed of cascade loops. The external loop is designed to control the mechanical rotor speed through a mechanical torque set point. The structure of the speed control system is schematically represented on Figure 13. It comprises three internal loops which control the stator phase currents through the voltage applied to the phases.

In section 4a) we will first describe the current control, both in the healthy state and under open phase fault (OPF) condition; in section 4b) we will then describe the mechanical speed control.

a) <u>Current control in the healthy state and under OPF conditions</u>

a1) <u>Current control strategies</u>

To be able to control separately the torque and the flux of the PMSM machine, Field-Oriented Control (abridged FOC, also known as vector control), is applied to control the primary machine components (*dp-qp*) of the stator currents, using a PI regulator on each of these components.

To apply sinusoidal currents with no field-weakening, the target is to maintain, for each winding group, all the *(dq)* currents null except the primary quadrature ones ($i_{qp}$) that will be applied for the control of the mechanical torque, in both healthy and OPF conditions.

In the electrical models given in equations (12,13) and (24,25), one can notice that there are still cross-coupling terms between the two axes. In addition, the back-EMF terms create nonlinearity in the *(dq)* model.

For this purpose, measured currents are used to create axes decoupling voltages that cancel those non-linearities of system to ensure an independent regulation in *(dq)* axes. In addition, the back-EMFs can be compensated, in the *(dq)* frame, by a feed-forward injection since their expressions are well-known.

In faulty operation, imposing zero current reference for the z-axis current ( $i_z^*=0$ ), results in four phase currents of equal amplitude in pairs as shown in equation (35). This strategy, which is known as the MJL approach (Minimal Joule Losses), guarantees a good power efficiency.

$$\begin{cases} i_{A_x}^* = 0 \\ i_{B_x}^* = 1.46 \cdot i_{qp}^* \cdot \cos\left(\theta - 40.2°\right) \\ i_{C_x}^* = 1.26 \cdot i_{qp}^* \cdot \cos\left(\theta - 151.8°\right) \\ i_{D_x}^* = 1.26 \cdot i_{qp}^* \cdot \cos\left(\theta + 151.8°\right) \\ i_{E_x}' = 1.46 \cdot i_{qp}^* \cdot \cos\left(\theta + 40.2°\right) \end{cases} \qquad \text{Equation 35}$$

The phases close to the open phase will have their current amplitude increased by 46.3% while the currents in the distant phases will be increased by 26.7%. The Clarke matrix allows to preserve the signal amplitudes. The phase shifts also change by $\pm0.555$ rad for the adjacent phases and $\pm0.137$ rad for the non-adjacent phases.

These new current references are intended to generate an electromechanical torque similar to that produced by the healthy PMSM, while interacting with the available back-electromotive forces.

a2) <u>Generalization of the fault tolerant control to arbitrary phase loss</u>

So far, the open phase fault has been dealt with in the case that it occurs on a specific phase, namely the A phase of the machine. The starting point to generalize the faulty model to any phase loss is to assume that all the phases are balanced and supplied by identical VSI legs. Also, the probability of failure occurring in phases is assumed to be the same for the overall electric drive.

Then, the first step is to rearrange the input vector of the $T_{Clarke_F}$ transformation depending on the lost phase. As illustrated in Figure 6, the first element of this vector is the phase which is next to the faulty one and the other elements are updated in a circulating way.

By making this rearrangement, the same $T_{Clarke_F}$ matrix as before (see equation (18)) can be used. However, the obtained stationary ($\alpha$-6) currents will be shifted over the first elements of the input vector (first phase) and the value of this shift depends on the lost phase. The shifts have to be compensated through the [$T_{Park_F}$] transformation according to the following equation:

$$\theta = \theta_{phA} - [\delta(n_{FP} - 1) + \theta_x] \qquad \text{Equation 36}$$

wherein $\theta$ is the rotation angle used in equation (35), $\theta_{phA}$ is the rotor position with respect to phase-A axis (provided by the position sensor or estimated by the observer), $n_{FP}$ represents the open phase number (zero in healthy mode) and $\theta_x$ is an angle equal to $\delta$ in healthy operation and zero otherwise. Table 1 summarized the Park transform angle offset values as a function of open phase number.

Table 1: Park angle adaptation depending on the OPF sequences

| nFP | Park transform angle offset |
|---|---|
| 0 (healthy case) | 0 |
| 1 (phase A) | 0 |
| 2 (phase B) | $+2\pi/5$ |
| 3 (phase C) | $+4\pi/5$ |
| 4 (phase D) | $+6\pi/5$ |
| 5 (phase E) | $+8\pi/5$ |

With the suggested generalization technique, whatever the faulty sequence, continuous currents will be obtained in the (d-q) plane.

Figure 7 shows the sequence of operations applied to the electrical variables so that they can be continuous in the (dq) domain.

a3) Fault detection

In the method according to the invention, the fault detection and isolation (FDI) process is based on the observation of the shape of each phase current (see figure 8). When the current value in a machine phase falls below a fixed threshold ($I_{phX\_th}$) for a period of time ($\Delta t$), the phase is considered to be open.

This detection time (i.e. the time difference between fault occurrence and the moment of detecting the fault) depends on the period of the phase currents.

After detecting the loss of a phase, the switches of the corresponding arm of the inverter are opened, to avoid short-circuiting the DC source.

a4) Controllers reconfiguration

The speed controller is the same under all operating conditions. Figure 9 shows an overview of the reconfigurable current controller developed for a single group of windings (there are three, one for each group). The same PI regulators are used to control the machine's primary currents under both healthy and OPF conditions.

A fault word (3×5 flags) is used to represent the state of the different phases of the machine. Depending on the sequence of faults, the reconfigurable control algorithm switches from one strategy to another, using multiplexers. The PI controllers associated with $i_{dp}$ and $i_{qp}$ currents are used, with the same coefficients in healthy and under OPF conditions. The PI associated with the $i_z$ current is only activated in the OPF condition.

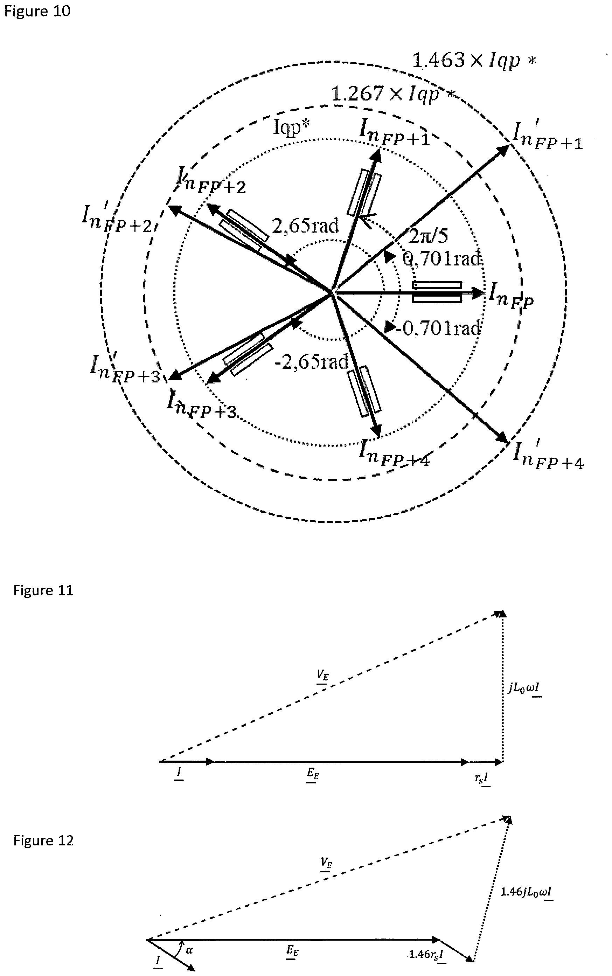

Figure 10 shows the final current references in healthy condition and under a fault on an arbitrary stator phase ($n_{FP}$), in one winding group.

As can be seen from figure 10, in case of a fault of one of the five phases, the group can be reconfigured in the following way: for two non-adjacent phases of said four remaining phases, the current is increased by about 26.7 % and the phase shift is about +/- 0.70 radian, and for two adjacent phases of said four remaining phases, the current is increased by about 46.3 % and the phase shift is about +/- 2.65 radian.

a5) Voltage limitation analysis

In healthy mode, when the machine is controlled in vector control by setting $i_{dp} = 0$, the current "I" is in phase with the Back-EMF "E". The Fresnel diagram in healthy operation is represented by figure 11 and equation 37:

$$V = \sqrt{(E + r_s I)^2 + (L\omega I)^2}$$

Equation 37

In degraded mode, the voltage required to correctly control the currents is greater, due to the change in current references (1.463 and 1.267 factors). The phase immediately preceding the open phase is the worst case, leading to the highest voltage per phase. The Fresnel diagram in degraded operation is shown on Figure 12. It can be seen that the current in the phase-E is about $1.463 \times I_{qp}$, when phase-A is open. Moreover, this current lags the EMF by approximately $\alpha$ = 30° (phase "E" ).

In addition, to optimize the utilization of the DC bus voltage while providing the same electromagnetic torque to the machine shaft, we apply another change to the current references for the 3 winding groups. The group that has the fault will have its current reference $i_{qp}^*$ (and the rms value) reduced by 40% ( $i_{qp}^* = 0.6 \times i_{qp}^{*,}$ ). To compensate for this decrease, the currents of the healthy groups will be increased by 20% each.

$$V = \sqrt{\begin{array}{c}(E + 0.6 \cdot 1.463 \cdot RI \cos \alpha + 0.6 \cdot 1.463 \cdot L\omega I \sin \alpha)^2 \\ +(0.6 \cdot 1.463 \cdot L\omega I \cos \alpha)^2\end{array}}$$ 

Equation 38

The voltage required across phase E, after reconfiguration, is $V_{phE}$ = 304.2Vrms. With $V_{DC}$ = 500 V, the inverter can supply up to V = 329.3 Vrms. The system remains in linear operation. a6) Stator windings Joule losses
The Joule losses for this machine in healthy operation can be calculated as follows, for a torque of 961 Nm:

$$P_{J_H} = 3 \cdot (5 \cdot R \cdot I^2) = 5.50 kW$$ 

Equation 39

In degraded operation, the Joule losses will be more important. Therefore, for the same torque, they rise to:

$$P_{J_F} = 2 \cdot 5 \cdot R \cdot (1.2 \cdot I)^2 + 2 \cdot R \cdot (0.6 \cdot 1.267I)^2 + 2 \cdot R \cdot (0.6 \cdot 1.463I)^2$$
$$= 6.27 kW$$ 

ation 40

which represents a further increase of 11.4%.

b) Mechanical speed control

Figure 13 shows the speed control and current control loops. Since torque is controlled by current $I_{qp}$, the output of the speed corrector will provide reference $I_{qp}^*$. As the internal q-axis current control loop is very fast compared to the speed loop (10 times faster), and has a unitary static gain, it is assumed to be perfect (error-free instantaneous response, $I_{qp} = I_{qp}^*$ ).

A simple PI (Proportional-Integral) controller can be used to control the PMSM rotor speed. The bandwidth is fixed to $BW_{des}$ = 100Hz ($\tau_{des} \approx 1.6 ms$). In order to achieve a first-order system closed-loop response, the proportional and integral coefficients of the controller are determined using the pole compensation method.
For the PI tuning, we consider a linear mechanical load, whose torque is expressed as:

$$T_L = k_L \cdot \omega_m$$ 

Equation 41

From the previous equation and the mechanical equation (32), we derive:

$$\begin{cases} K_{P_\omega} = \dfrac{J_{tot}}{\tau_{des}} = 163.36 \, [kg \cdot m^2 \cdot s^{-1}] \\ K_{I_\omega} = \dfrac{k_L}{\tau_{des}} = 5076 \, [N \cdot m \cdot rad^{-1}] \end{cases}$$ 

Equation 42

The speed control reference for the system is constrained to a maximum of 1136 kRPM, and the acceleration rate is limited to 3500 kRPM/s.

Additionally, the setpoints of the currents developing the torques ( $i_{q1,2,3}^*$ ) are constrained to the range of [0A,100A].

5. Examples for simulation-based validations

a) Description of a simulation setup

In order to test and validate the controllers and estimators designed for the PMSM in healthy and faulty operations, simulations were conducted on the Matlab/Simulink software.

Components from the Simscape Electrical (SSE) library were used to model the inverter and the machine in order to take into account several imperfections of the components (MOSFETs Resistances, the couplings between the PMSM windings).

The simulation parameters fixed for all the following tests are given in Table 2.

Table 2 Simulation settings

| Parameter | Notation | Value | Unit |
|---|---|---|---|
| Control sampling period | $T_s$ | $25.6 \times 10^{-6}$ | s |
| PWM period | $T_{PWM}$ | $25.6 \times 10^{-6}$ | s |
| Dead-time | $T_{DT}$ | $500 \times 10^{-9}$ | s |
| Simulation fixed-step | $T_{sim}$ | $40 \times 10^{-9}$ | s |
| Simscape Electrical sampling time | $T_{HW}$ | $40 \times 10^{-9}$ | s |
| Numerical solver | - | Runge-Kutta (ode4) | |
| Data logging sample time | $T_{plot}$ | $1.0 \times 10^{-6}$ | s |

The mechanical load torque is represented in these tests by a quadratic function of the rotor speed. All the control blocks are synchronized with the PWM carrier peaks. No sensor imperfections are added (non-linearities, noise ...). Analog digital conversion inaccuracies are not simulated (limited resolution, quantization errors).

The model of the Permanent Magnetic Synchronous Motor is implemented using the equations in the natural reference frame, presented in equations (1,2). When a fault occurs, the circuit of the phase concerned is disconnected by means of a breaker which cancels the current flowing through it.

For an accurate simulation of the VSI, a model has been developed under the Matlab/Simulink/SimPowerSystems Electrical environment. The inverter model is composed of MOSFET-based full bridge modules. For each switching cell, the four MOSFET switches are included. Equivalent electrical circuits are used to consider the imperfections related to the switches.

The phase duty cycles of the PWM generation modules, which are initially expressed in the interval [0,1] by the controllers, undergo saturation within the range [0.025, 0.975].

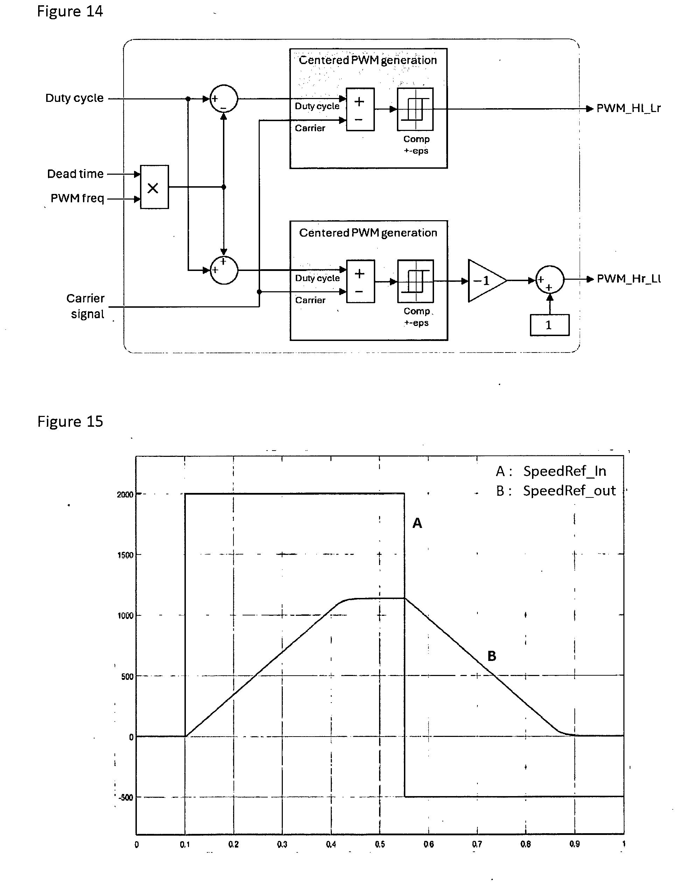

The diagram presented in Figure 14 provides a detailed representation of the structure of a PWM generation module. Additionally, it visually shows the application of dead time to the switch commands.

All the control blocks are discrete, enabling a more accurate simulation of the control algorithms that will be implemented in a digital environment.

The controller contains two sources of delays. The first one is the measurement of the phase currents and mechanical quantities (Speed/position) ($T_{msr} = T_s$). The second one is due to the execution time ($T_{exe} = T_s/2$). The delays do not add gain to the model, but they introduce phase shift.

b) Speed reference filter

To protect the synchronous machine and keep control of the speed during transient phases while ensuring a fast speed control loop, the algorithms implement a digital speed filter. The filter limits mechanical variations in order to avoid high accelerations, limiting consequently the developed torque. A maximum acceleration of 3500 RPM/s is set (speed setpoint ramp). The speed command is limited to 1136 kRPM.

The discrete time transfer function is represented by equation 43:

$$T_L = \frac{A \cdot J}{1 + (J + (A \cdot J) - 2) \cdot z^{-1} + (1 - J) \cdot z^{-2}} \qquad \text{Equation 43}$$

wherein the input saturation is (0.1136 RPM), the output saturation is (0.101 x 1136 RPM), coefficient A is ($T_s$/0.02), coefficient J is ($T_s$/0.01), the saturation coefficient A is (-$T_s$ x 3500, + $T_s$ x 3500), and the saturation coefficient J is (-$T_s^2$ x $10^5$, + $T_s^2$ x $10^5$).

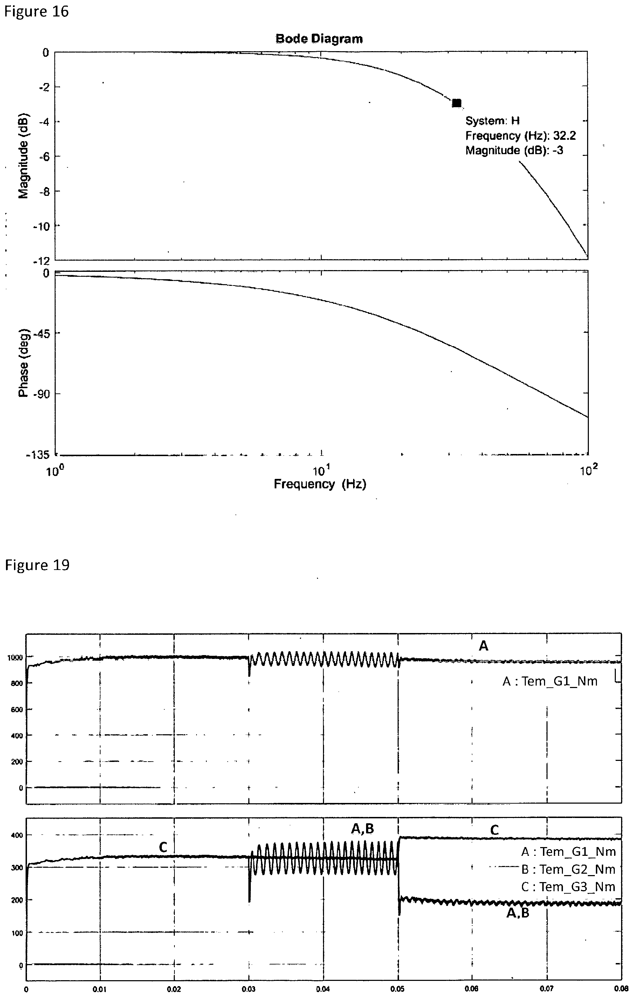

Figure 15 shows a plot the filter time response, while its Bode diagram is shown on figure 16, after removing the saturations to avoid non-linearities (right).

c) Validation of the current control

In order to test and validate the dynamic performance of the reconfigurable current controllers, simulations were conducted with the PMSM drive in healthy, faulty (fault appeared without reconfiguration) and degraded condition (fault appeared with reconfigured control). The phase currents are controlled to follow the references ( $i^*_{d_{1,2,3}} = 0$ ) and (

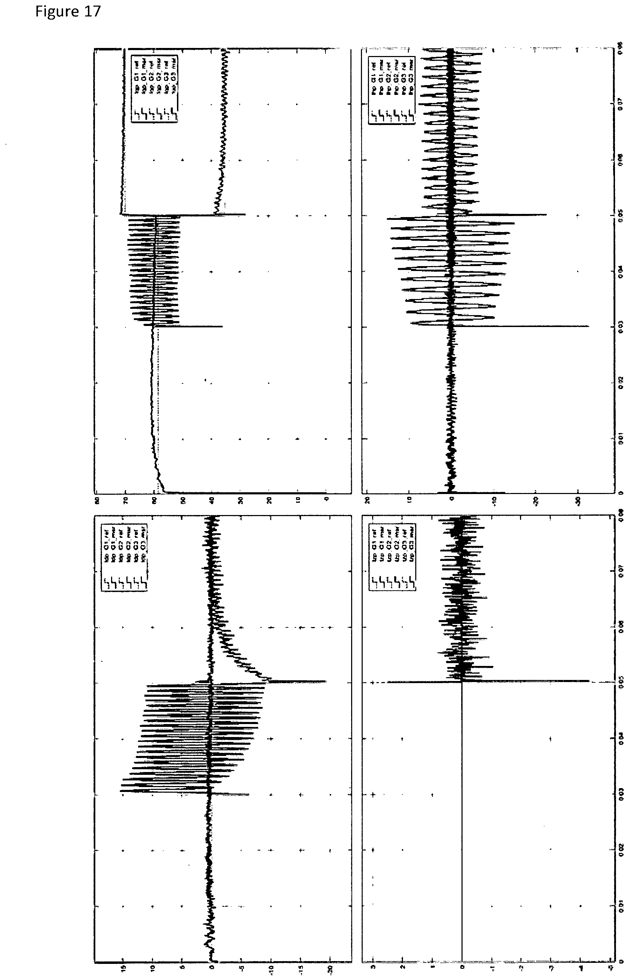

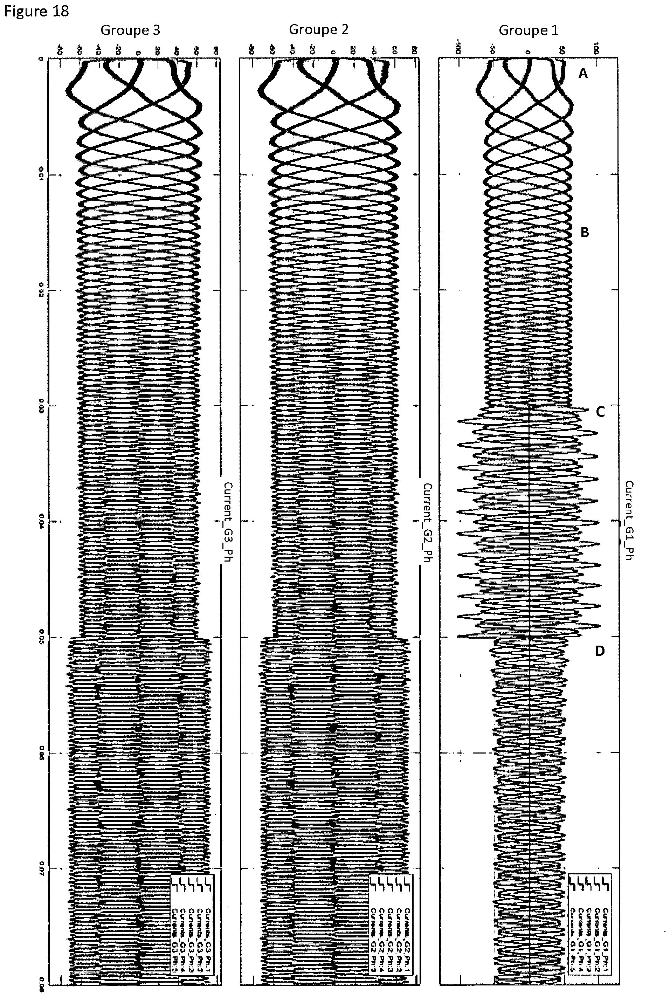

$i^*_{q_{1,2,3}} = 41.35A$ ). The results are shown on Figure 17 (Controlled DQ currents in healthy, faulty and degraded operation), Figure 18 (Phase currents of motor winding group (1,2,3)) and Figure 19 (Developed torques of the PMSM and each winding group).

Figure 18 shows the evolution of the phase current as a function of time for each of the three groups 1, 2 and 3. After a starting phase (letter A), the phase currents stabilize (letter B). Suddenly (letter C) a, open-circuit fault occurs in a phase of Group 1 and is detected. At point D, the fault tolerant control according to the invention is activated, leading to a fast reconfiguration of the system. After reconfiguration (after point D) the phase currents in Groupe 1 are somewhat lower than before the fault occurred but show a good stability, and the phase currents in Group 2 and Groupe 3 are somewhat higher than before the reconfiguration occurred. The output of the inverter is not as good as before the fault occurred, but good enough to ensure that the PMSM continues to operate sufficiently well, without any interruption of service. This is of paramount importance for use in space devices, such as in a cryogenic pump in a space launch system.

It can also be seen that in the healthy operation, the measured $i_{qp}$ is well regulated and the observed ripple is maintained below 5.4 N.m RMS (0.56%) margin. More details are given in the previous chapter.

Regarding the OPF condition, these figures highlight the case when the first phase is lost but without any modification on the control algorithm. In this case, the control is downgraded and remarkable oscillations on torque are observed (4% for this test). Consequently, the maximum current values of some phases reach high levels.

The adopted FTC control strategy allowed to impose two equal phase current amplitudes ($|i_{phB_{G1}}| \approx |i_{phE_{G1}}|$ and $|i_{phC_{G1}}| \approx |i_{phD_{G1}}|$) with the optimal phase shifts which made it possible to limit the electromechanical torque ripples to a quite reasonable value in degraded mode $\approx 6.9$ N.m RMS (0.72%); this is acceptable under practical conditions.

d) Validation of the speed control

The performance of the speed control system was evaluated through the following test that presents a speed control following a profile covering different speed ranges.

In this test, several faults were simulated. At time 0.4 s, phase A of the first winding group is open. Shortly afterwards, the control algorithms are reconfigured to apply the new control strategy corresponding to the degraded mode. The same applies to other phases of the machine (Group 1: Phase-A @0.4s, phase-C @0.5s; Group 2: Phase-B @0.6s, phase-D @0.7s; Group 3: Phase-A @0.8s, phase-E @0.9s). Note: after opening a phase follows a re-closing to simulate several cases, in a single test.

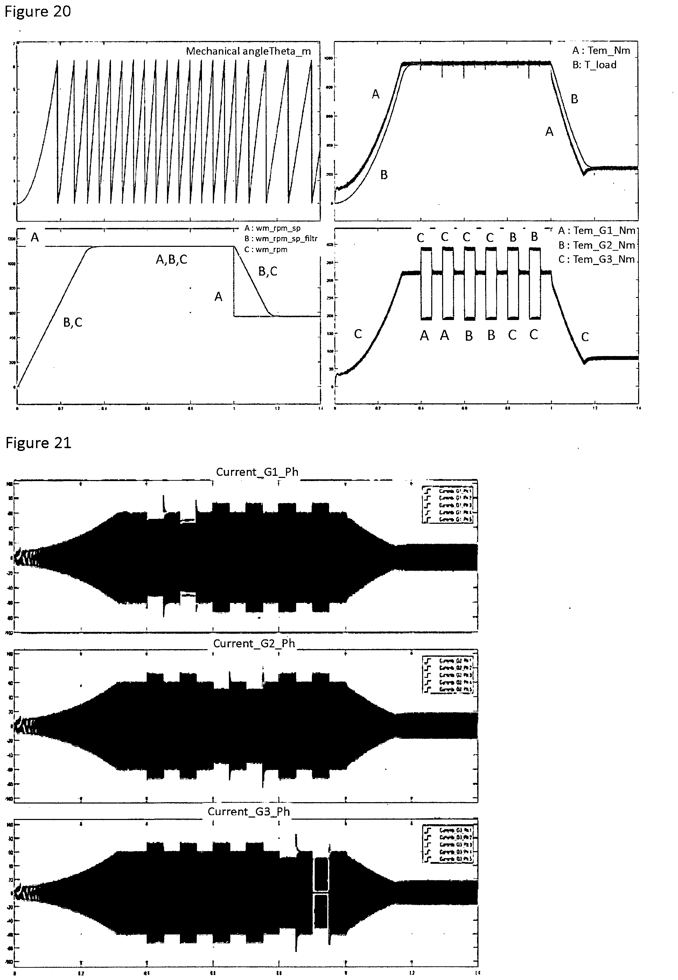

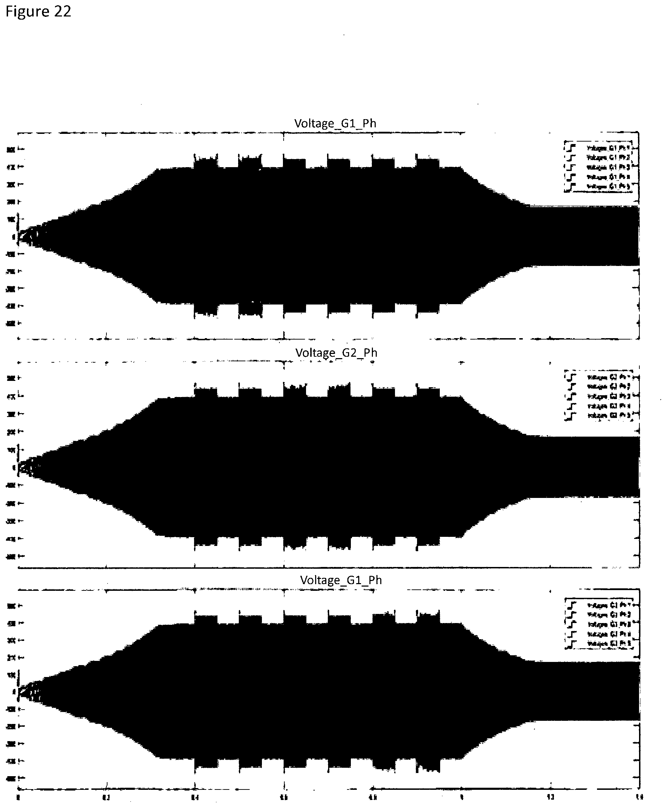

Results are shown on Figure 20 (Mechanical variables) and Figure 21 (Evolution of stator phase measured currents for the three winding groups) and Figure 22 (Evolution of command voltages for the three winding groups).

Thanks to the speed reference conditioning provided by the 2nd order digital filter and its saturation at three levels (speed, acceleration, and second derivative of speed), the evolution of the controlled speed is smooth. Speed and stator current control are well performed in all the cases studied. Controller reconfiguration and FTC control strategy changes are automatic. Torque ripples remain very limited, below 1% in all established regimes, the occasional peaks observed being generated by changes in control strategies following the opening or closing of stator phases. Rotor speed evolves in a stable manner, with no ripples due to reconfigurations. With the machine parameters selected and the choices made concerning motor control, the bus voltage is used optimally. Phase voltages are never saturated (Figure 22), enabling proper torque and speed control to be maintained.

These results demonstrate the effectiveness of the implemented speed control loop in accurately regulating the motor speed.

6. Discussion and conclusions

In conclusion, this invention focuses on the design and control of a new electrical drive structure through theoretical analysis, modelling, and simulations. The results indicate that the fault-tolerant control method solves the problem to ensure continued and reliable operation of the motor in the presence of faults.

The machine structure with a fifteen-phase stator allows, in addition to distributing power across a large number of phases, thereby reducing the size of the required power switches, to increase tolerance to the loss of one phase. On one hand, it is possible to reconfigure the current control within a winding group. On the other hand, the separation of the three groups and their inverters allows for the modification of the applied current levels (electromagnetic torque) by winding group in order to reduce torque ripples, minimize joule losses, and improve voltage management. In this fault tolerant control system, the open phase fault detection technique is based on the monitoring of stator current amplitudes. The detection time is directly related to the speed of the machine. The current Fault Detection and Isolation (abridged FDI) methods are not able to detect phase loss at very low speeds, due to current measurement noise. Therefore FDI is only activated at a specific speed depending on the current measures quality.

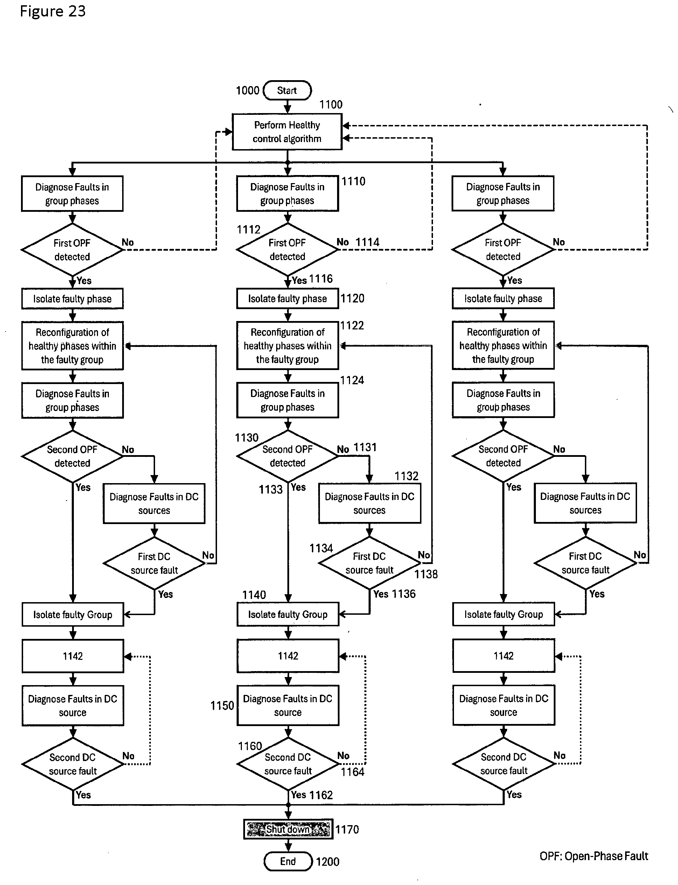

Figure 23 shows a simplified flow diagram of a method according to an embodiment of the invention which allows to control the Fault Tolerant Control (FTC) method and which allows transitions from one mode of operation to another, in case of failure.

The control starts and we suppose that all 15 phases are healthy and operating with normal voltage (called here "initial voltage").

When the method is started (step 1000 "Start"), the control algorithm for a healthy machine (step 1110 "Perform control algorithm for healthy machine") will be carried out continuously and simultaneously for all the three groups of phases. The frequency at which the method is started can for example be of the order of about 40 kHz.

In a first step (1110 "Diagnose faults in group phases") a first diagnose for the detection of faulty phases is carried out within the relevant group. This can be done as described in section 4 of the description. If in step 1112 ("First OPF detected?") no faulty phase is detected (step 1114), the process will go back to the control algorithm (step 1100).

If a first faulty phase is detected (step 1116), this faulty phase is isolated from its group of phases (step 1120 "Isolate faulty phase"). This can be done by any appropriate means, which depend on the configuration of the circuit. As an example, in some applications the phase can be isolated by opening appropriate switches, such as thyristors and/or transistors. In other applications, the phase is isolated by interrupting it with a transistor which remains, in normal operation of the phase, in a closed state: by no longer addressing a closing signal to said transistor, the transistor will remain in an open state, thereby isolating the phase. In the example of the circuit of figure 4, in order to isolate the first phase (A1), switches $Sw1_{Hl}$, $Sw1_{Hr}$, $Sw1_{Ll}$ and $Sw1_{Lr}$ would be opened.

In the step "Reconfiguration of healthy phases within the faulty group" (step 1122) the four other phases of the faulty group are reconfigured and the currents of the two healthy groups are increased, such as to compensate at least in part for the decreased power of the group in which a first faulty phase has been identified. This is done by increasing the current reference values; the real currents will follow and adjust automatically.

The reconfiguration can be achieved by adapting field-oriented control: instead of applying control laws adapted to the healthy machine, control laws adapted to the machine with an OPF fault will be applied. This can be done by changing the transformation matrix which is used; the open phase will no longer be controlled, but the Proportional-Integral (PI) controller controlling the current $i_z$ will be activated (see figure 9). The dark trapezoids designate selectors which, depending on the "Fault" value, will let one signal pass to the other.

Then a second diagnose for the detection of the detection of further faulty phases is carried out within this group (step 1124 "Diagnose faults in group phases"). If no second OPF is detected at step 1130 ("Second OPF detected?"), a first fault diagnosis is carried out in the DC sources (step 1132 "Diagnose faults in DC sources"). If no DC source fault is detected (step 1138), the OPF condition control on the faulty group will be repeated (step 1122). If a DC source fault is detected (step 1136), then the faulty group will be isolated (step 1140 "Isolate faulty group"), that is to say, disabled, and the current of the two healthy groups will be increased such that the current increases by a factor of about 1.5 (step 1142 "Increase the current in the health groups such that current is about 1.5 times the initial value") to compensate for the loss of the faulty group.

Then a second fault diagnosis is carried out on the DC sources (step 1150" Diagnose faults in DC source"). If at step 1160 no second DC source fault is detected (step 1164), the current of the two healthy groups remains at the same level as before, that is to say, increased by a factor of 1.5 (step 1142). In the unlikely event that a second DC fault (step 1162) is detected at step 1160, then the motor will be shut down (step 1170 "Shut down") as it is impossible to compensate for two faulty groups. This leads to the end of the method (step 1200 "End").

This method is carried out on each of the three groups of phases, with a common frequency.

It should be noted that in an advantageous variant of this method, the diagnose of faults in DC sources (step 1132) is carried out continuously and independently of the detection of a second OPF (step 1130). In this case, the detection of a first DC source fault (step 1136) will follow the same path: isolation of the faulty group (step 1140), and increase of current until the increase in current or power reaches a factor of about 1.5. If a second DC source fault is detected (step 1162) the consequence is the same: the shutdown of the motor at step 1170.

Bibliographic references:

[1] I. Assoun et al., "Commande sons capteur mecanique d'une MSAP pentaphasée en mode sain et dégradé », presented at the Symposion de Génie Electrique (SGE 2020) in Nantes.

[2] Zhi Kuang et al., « Thermal Analysis of Fifteen-Phase Permanent Magnet Synchronous Motor Under Different Fault Tolerant Operations", IEEE Access, vol. 7 (2019), p. 81466-81480; doi:10.1109/ACCESS.2019.2921993

[3] Shumei Cui, "Multiphase PMSM with Asymmetric Windings for Electric Drive", Energies 2020, 13, 3765; doi:10.3390/en13153765

**Claims**

1. Method for fault detection and autonomous reconfiguration of a system comprising an electromechanical converter, capable of detection faults and autonomously reconfiguring itself to ensure post-fault operation with acceptable performance,

   said system comprising:

   a permanent magnet synchronous motor with open-end windings, said motor comprising three identical groups of phases, each group of phases having five phases, each group of phases having a separate DC voltage source, and each group of phases having an inverter or a static converter with a H-bridge or full-bridge structure,
   in which method:

   if a first faulty phase is detected, then this faulty phase is isolated from its group and the four remaining phases of said group are reconfigured, such as to increase their currents to compensate at least in part the lost current of the faulty phase,
   and/or in which method,
   if a first faulty DC source is detected, the group to which said faulty DC source belongs is a disabled group, and the currents are increased in the two remaining groups, such as to compensate at least in part the lost current of the disabled group.

2. Method according to claim 1, wherein to compensate said first faulty phase, the four remaining phases are reconfigured by increasing their current amplitudes and applying a phase shift, such as to compensate at least in part the lost current of the faulty phase.

3. Method according to claim 2, wherein for two non-adjacent phases of said four remaining phases, the current is increased by about 26.7 % and the phase shift is about +/- 0.70 radian, and for two adjacent phases of said four remaining phases, the current is increased by about 46.3 % and the phase shift is about +/- 2.65 radian.

4. Method according to any of claims 1 to 3, in which method, if a second faulty phase is detected in the same group as the first one, the group to which said faulty phase belongs is a disabled group, and the currents of the other groups are increased such as that their current compensates at least in part the lost current of said disabled group.

5. Method according to any of claims 1 to 4, in which method, if another faulty phase is detected in another group, the currents are increased in the two other groups, such as to compensate at least in part the lost current the group with the other faulty phase.

6. Method according to any of claims 1 to 5, wherein to compensate for a disabled group, the currents of the two remaining groups are increased such that their current increases by about 50 %.

7. Method according to any of claims 1 to 5, in which, if a second group becomes disabled, the motor is shut down.

8. Method according to any of claims 1 to 6, in which said faulty phase is isolated by opening switches of the corresponding arm of the inverter.

9. System for an electromechanical converter, capable of detection faults and autonomously reconfiguring itself to ensure post-fault operation with acceptable performance,

said system comprising:

a permanent magnet synchronous motor with open-end windings, said motor comprising three identical groups of phases, each group of phases having five phases,

each group of phases having a separate DC voltage source,
each group of phases having an inverter or a static converter with a H-bridge or full-bridge structure,

and said system further comprising a programmable logic device, configured for carrying out the method for fault detection and autonomous reconfiguration of the system according to any of claims 1 to 8.

10. System according to claim 9, in which said motor further comprises means for determining the position of the rotor with respect to the stator.

11. Use of a system according to any of claims 9 to 10 in the field of aircraft engineering or space engineering, in particular for operating a pump, such as a fuel pump or a pump for pressuring fluids, possibly cryogenic fluids, or as a propelling motor.

12. A computer program comprising instructions which, when the program is executed by a programmable logic device integrated into the system according to claim 9 or 10, cause said system to carry out steps of the method for fault detection and autonomous reconfiguration of the system of any of claims 1 to 8.

Figure 1

Rotor

Permanent magnets

Stator

Phase windings

Figure 2

Figure 3

Figure 5

Figure 4

Figure 7

Figure 6

Figure 8

Figure 9

Figure 13

Figure 10

Figure 11

Figure 12

Figure 14

Figure 15

Figure 16

Figure 19

Figure 18

Groupe 3      Groupe 2      Groupe 1

Figure 20

Figure 21

Figure 22

Figure 23

OPF: Open-Phase Fault

**EUROPEAN SEARCH REPORT**

Application Number

EP 24 31 5548

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | KUANG ZHI ET AL: "Thermal Analysis of Fifteen-Phase Permanent Magnet Synchronous Motor Under Different Fault Tolerant Operations", IEEE ACCESS, vol. 7, 10 June 2019 (2019-06-10), pages 81466-81480, XP011732734, DOI: 10.1109/ACCESS.2019.2921993 [retrieved on 2019-06-28] | 1-3,6,7, 9-12 | INV. H02P25/22 H02P29/024 H02P29/028 |
| Y | * page 81467; figure 1 * <br> * page 81472; figure 7; table 1 * <br> * Paragraph III,B; <br> page 81471 - page 81473; figure 7 * <br> * figure 2 * <br> ----- | 4,5,8 | |
| Y | US 2023/075867 A1 (CHENG YANG [CN] ET AL) 9 March 2023 (2023-03-09) <br> * paragraph [0069] - paragraph [0073]; figure 2 * <br> ----- | 4,5 | |
| Y | TIAN BING ET AL: "Neutral Voltage Modeling and Its Remediation for Five-Phase PMSMs Under Single-Phase Short-Circuit Fault Tolerant Control", IEEE TRANSACTIONS ON TRANSPORTATION ELECTRIFICATION, IEEE, vol. 8, no. 4, 29 July 2022 (2022-07-29), pages 4534-4548, XP011924320, DOI: 10.1109/TTE.2022.3195289 [retrieved on 2022-08-01] <br> * Paragraph II,B; <br> page 4536; figure 1 * <br> ----- | 8 | TECHNICAL FIELDS SEARCHED (IPC) <br><br> H02P |

The present search report has been drawn up for all claims

| Place of search | Date of completion of the search | Examiner |
|---|---|---|
| Munich | 16 May 2025 | Schürle, Patrick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

    & : member of the same patent family, corresponding document

EPO FORM 1503 03.82 (P04C01)

EP 4 757 169 A1

## ANNEX TO THE EUROPEAN SEARCH REPORT
## ON EUROPEAN PATENT APPLICATION NO.

EP 24 31 5548

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | Publication date | Patent family member(s) | | Publication date |
|---|---|---|---|---|
| US 2023075867 A1 | 09-03-2023 | CN | 113905922 A | 07-01-2022 |
| | | EP | 4094970 A1 | 30-11-2022 |
| | | JP | 2023515441 A | 13-04-2023 |
| | | US | 2023075867 A1 | 09-03-2023 |
| | | WO | 2021163864 A1 | 26-08-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. ASSOUN et al.** Commande sons capteur mecanique d'une MSAP pentaphasée en mode sain et dégradé. *Symposion de Génie Electrique (SGE 2020) in Nantes*

- **ZHI KUANG et al.** Thermal Analysis of Fifteen-Phase Permanent Magnet Synchronous Motor Under Different Fault Tolerant Operations. *IEEE Access*, 2019, vol. 7, 81466-81480
- **SHUMEI CUI**. Multiphase PMSM with Asymmetric Windings for Electric Drive. *Energies*, 2020, vol. 13, 3765